# EUROPEAN PATENT SPECIFICATION

(11) **EP 2 521 358 B1**
(45) Date of publication and mention of the grant of the patent: **14.09.2016**
(21) Application number: 11164807.7
(22) Date of filing: 04.05.2011
(51) Int. Cl.: H04N 13/00

(54) **Image Cross-talk Cancellation in Stereoscopic Video Display Devices**
Unterdrückung des Bildübersprechens in stereoskopischen Videoanzeigevorrichtungen
Annulation de diaphonie d'images dans des dispositifs d'affichage vidéo stéréoscopique

(43) Date of publication of application: 07.11.2012
(73) Proprietor: C.R.S. iiMotion GmbH, 78048 Villingen (DE); LG ELECTRONICS INC., Yeongdeungpo-gu Seoul 150-721 (KR)
(72) Inventor: Weitbruch, Sébastien, 78048 Villingen-Schwenningen (DE); Correa, Carlos, 78048 Villingen-Schwenningen (DE); Lübcke, Gerold, 78048 Villingen-Schwenningen (DE)
(74) Representative: Westphal, Mussgnug & Partner Patentanwälte mbB

(56) References cited:
- EP-A1- 1 460 857
- WO-A1-2010/150519
- JP-A- 2001 258 052
- US-A1- 2010 271 464

## Description

### Technical Field

The present Invention generally relates to display devices for reproducing stereoscopic video data, in particular to display devices employing a field-sequential method and including an image cross-talk cancellation capability for improving the quality of three-dimensional image reproduction.

### Background

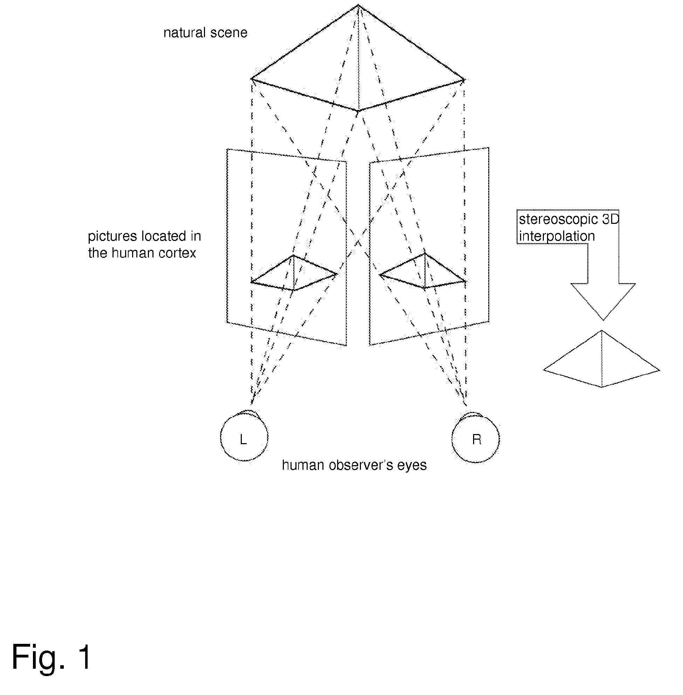

The 3D perception from the Human Visual System (HVS) is based on the close side-by-side positioning of the eyes as shown in Fig. 1. Each eye takes a view of the same area from a slightly different angle. These two separate images are sent to the brain for processing. When the two images arrive simultaneously in the back of the brain, they are united into one picture. The human mind combines the two images by matching up the similarities and adding the small differences to catch finally a three-dimensional stereo picture. With stereovision, the HVS sees an object as solid in three spatial dimensions (width, height and depth) and it is the additional perception of the depth dimension that makes stereovision so rich and special. Moreover, a stereo picture will increase the impression of sharpness in the brain.

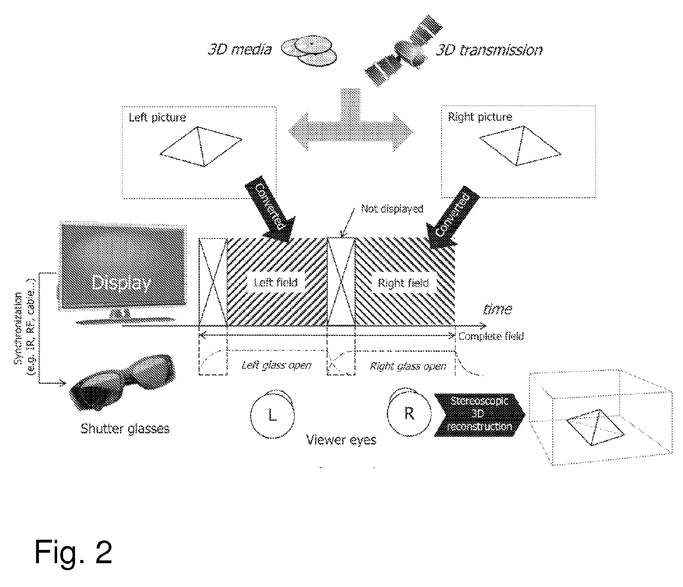

3D images are generated using two video cameras positioned side-by-side in a similar way than the human eyes. Other methods mainly based on complex software are also able to generate artificial stereo pictures by ray tracing (simulation of light propagation). In the further discussion, these images will be referred to as left and right images. If right and left images stemming from a video source are displayed in a sequential and alternating manner as shown in Fig. 2 and if a synchronized shutter system in front of the eyes allows the right image to only enter the right eye and conversely, then a three-dimensional video reproduction can be observed. The shutter can be mounted in eyeglasses and is synchronized with a display in which two constituent pictures are presented in alternation instead of simultaneously. The glasses occlude either the left eye or the right eye in synchronism with the image displaying.

A simple method to implement a stereoscopic display is based on the separation of sub-fields into left (L) and right (R) groups which are synchronized with the open and close stage of the LCD shutter glasses. An advantage of such a method is the compatibility of the flat panel display (FPD) between 2D and 3D modes. This compatibility is ensured through a simple change of the display mode (single or double frame rate).

This method is often called "field-sequential" or "active-glass system" and enables to keep the full resolution of the display in 3D. Indeed, in case of polarizer systems (i.e. a passive glass system), each odd and even line is dedicated to another eye, thus reducing the displayed resolution in 3D by a factor two. Moreover, such polarizer filters are built on the front glass of the panel, thus reducing partly its brightness both in 2D as well as in 3D. Nevertheless, this field-sequential method can introduce other discomfort such as the introduction of time parallax between the two images, or the possibility of "ghosting" or crosstalk between the images due to the time response of the display (e.g. phosphor persistence in case of plasma display panels (PDPs) or grey-to-grey switching time in case of liquid crystal displays (LCDs). Most glasses-shutter systems use LCDs which work with polarized light. Currently, glasses using LCDs can provide good switching speed and reasonable extinction of the alternative lenses. The electro-optical polarizing shutters available on the market today transmit less than 30% of the unpolarized input light (rather than 50% for perfect polarizers) and this reduces the image brightness tremendously. Some eyeglass shutters are connected by wires to the monitor, others are controlled by infrared or by radio communication and are wireless.

Displaying stereo pictures on a flat panel display also requires the capability to display two different pictures per frame (i.e. doubling the frame rate) which is a new challenge for this technology.

The main problem encountered with such a solution is the problem resulting from the so-called "display response time" (also called "phosphor lag" in case of PDPs). As already mentioned, in the case of LCDs this problem is due to the slow response time of the liquid crystal when switching from a grey level to another grey level. In the case of PDPs, the phosphor elements associated with the colours red and green require too much time to switch off, and so a "shadow image" of the right image is still visible when displaying the left image and vice versa, which deteriorates the resulting stereoscopic image reproduction. This effect is often named "crosstalk" whereas this refers to the cause (i.e. incomplete separation of left and right images) or "ghost-image", which refers to the subjective perception of the images.

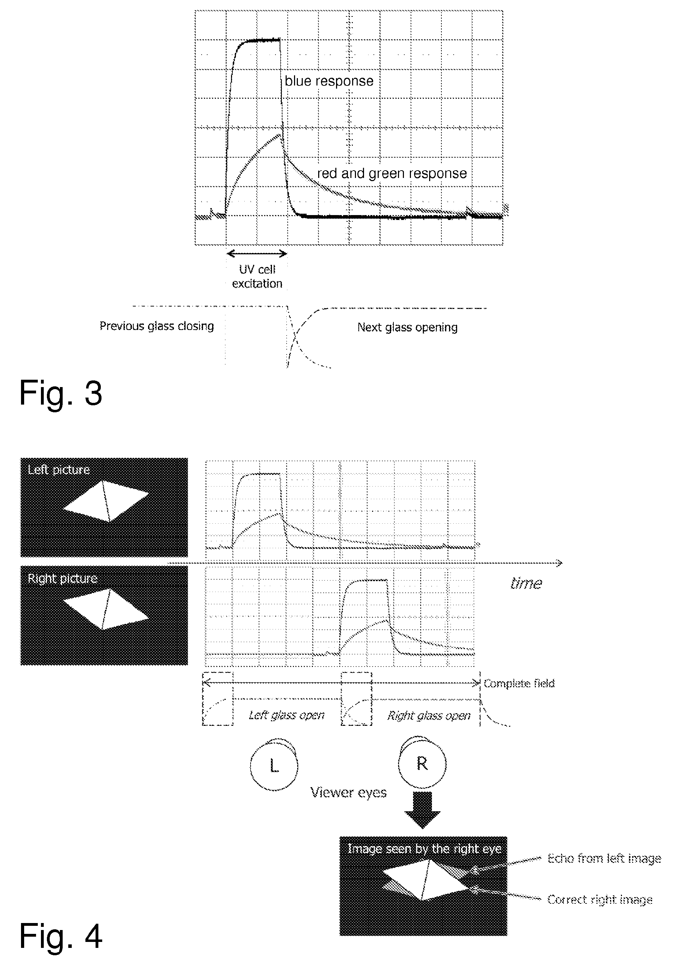

Figure 3 illustrates the response of each phosphor element to the same excitation in the case of a plasma display panel (PDP). The response time of the phosphor elements associated with the colors red and green is longer than that of the phosphor elements associated with the color blue, which is almost equal to the primary excitation (UV light caused by the gas or plasma discharge inside the PDP cells). These long reaction times for red and green materials exceed usually the reaction time of the viewing glasses when closing and will be therefore perceived by the "wrong" eye.

For the further discussion, the assumption shall be made that the displaying of a stereoscopic image starts with the left image. An image, which is seen by the right eye (respectively left eye), will be called a right image (respectively left image).

As a result of the slowness of the red and green phosphor elements, the phosphor elements activated for the left image are still luminous while the right image is displayed or, in other words, after the opening of the right glass. Consequently, there will be a so-called "ghost image" (also denoted as "echo") visible in the right image but stemming from the left image, and on a subsequent left image an echo image stemming from the right image can be observed. This cross-talk effect is illustrated in Figure 4, which shows how subfields behave in such a configuration.

In addition to that, the energy lagging into the subsequent image (dedicated for the other eye) is energy that is missing for the correct eye. It can be seen from Figure 3 that the areas enclosed by the three curves for red, green and blue (i.e. the integral) are similar but, if the shutter glasses would have been closed in synchronism with the blue phosphor, a part of the energy from red and green materials will be lost.

However, the stereoscopic system as described above requires the left image to be seen only by the left eye, and the right image to be seen only by the right eye. However, due to the slow decay of the luminance of the green and red phosphor elements when shutting off, the right eye will receive some fraction of the luminance of the left image and conversely. The phosphor lag will prevent a proper stereoscopic effect since the right eye receives both right and left information. The echo (or crosstalk) image is usually perceived as a kind of doubled image (remaining parts of left image are superimposed to the right one and vice versa) and lead to a lack of sharpness or even to a temporal loss of the depth perception in some particular cases (e.g. in case of images with strong contrast).

The mentioned ghost images and the related image crosstalk are a problem that has to be considered when using a display technology with not-instant reaction time (such as PDPs and LCDs in field-sequential mode) for stereoscopic image reproduction. However, image cross-talk may also appear when using other video reproduction devices such as video projectors or the like, and the problems mentioned above are not limited to PDPs. The publication EP 1 460 857 EP and WO 2010/150519 A1 relate to crosstalk cancellation in stereoscopic images. However, an actual cancellation of ghost images as required e.g. in PDPs is not achieved.

Also some attempts have been made to alleviate the problem described above by preprocessing the video data before actually displaying the data, there is still a need for a device capable of high-quality stereoscopic image reproduction by particularly avoiding image cross-talk.

### Summary

A method for processing video data comprising a sequence of successive image frames is disclosed. In accordance with one example of the invention the method comprises: receiving an image frame from a video data source; calculating a first echo image based on the image frame; providing a second echo image based on a further image frame preceding the image frame; calculating an echo compensated image frame by subtracting the difference of the echo images from the image frame.

### Brief Description of the Drawings

The invention can be better understood referring to the foil-lowing drawings and descriptions. In the figures like reference numerals designate corresponding parts. In the drawings:
- Fig. 1: is a diagram illustrating the principle of stereoscopic vision;
- Fig. 2: is a diagram illustrating the principle of stereoscopic image reproduction using time or field-sequential method;
- Fig. 3: is a timing diagram illustrating the time response of different phosphor elements of a PDP;
- Fig. 4: illustrates the effect of the phosphor lag when reproducing stereoscopic images using a PDP;
- Fig. 5: illustrates by means of a flow diagram one method of crosstalk cancellation by subtracting the undesired echo images;
- Fig. 6: illustrates by means of a timing diagram the effect of image cross-talk and an optimum compensation thereof;
- Fig. 7: illustrates the image cross-talk compensation according to one example of the present invention;
- Figs. 8A and D: illustrate different examples of Fig. 7 by means of a flow diagram;
- Figs. 8B and C: illustrate alternatives to the embodiments of Figs. 7, 8A and 8D; and
- Fig. 9: illustrates different examples of brightness manipulation before cross-talk cancellation.

### Detailed Description

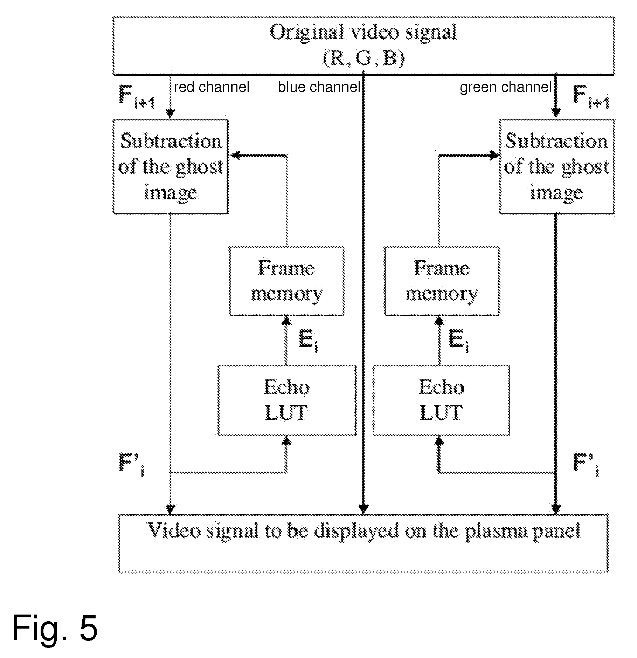

One option to avoid the image crosstalk as discussed in the introduction is to subtract an estimated echo image (or "ghost image"), which is obtained from one (e.g. left) image, from the subsequent (e.g. right) image. However, such an approach has some considerable drawbacks as does not allow for a full compensation of the echo image without deteriorating the quality of the resulting stereoscopic image. In particular a sufficient compensation of the echo image (i.e. a sufficient cross-talk cancellation) can only be achieved when the contrast of the image is reduced. Such a method is illustrated in Fig. 5. Thereby, the subtraction is done regardless of the cross-talk visibility. In other words, in regions without disparity (right image = left image), subtraction will be performed even though no disturbing effect is created in these regions. This will induce an undesired global loss of brightness.

The flow diagram of Fig. 5 illustrates one exemplary method of pre-processing stereoscopic video data in order to avoid visible echo images in the images actually displayed. Accordingly, an echo image Eᵢ is estimated from one frame Fᵢ' of a video signal to be displayed. Thereby a frame represents the brightness values of the (red, blue and green) pixels composing one single left or right image. This echo estimation may be performed separately for each color channel, whereby in applications using PDPs for 3D image presentation the blue channel may remain uncompensated. Further a look-up table (LUT) of pre-calculated data may be used for such estimation. The estimated echo image Eᵢ is stored in a frame buffer and subtracted from the subsequent frame Fᵢ₊₁ of the original video signal. In other words, one (e.g. left) frame Fᵢ' of a video signal to be displayed is obtained from the corresponding (left) frame Fᵢ of the original video signal by subtracting therefrom an echo image Eᵢ₋₁, which is estimated from the preceding (e.g. right) frame Fᵢ₋₁' (Fᵢ' = Fᵢ-Eᵢ₋₁). The subscript "i" thereby denotes a time index.

Although resulting in an improved stereoscopic image presentation, the method outlined above with respect to Fig. 5 does not achieve a full cancellation of the cross-talk induced by echo images. As a frame can only include positive brightness values, a full echo compensation can not be achieved in parts of an image that has low brightness values and where the subtraction mentioned above (Fᵢ' = Fᵢ-Eᵢ₋₁) would yield negative values. In order to circumvent this problem an offset brightness may be added to the frame. As a result, however, regions originally appearing black or almost black will then appear as grey.

The cross-talk cancellation approach as outlined above tries to cancel the echo image regardless of whether the echo is actually visible in different parts of the image to be displayed. An improved method of pre-processing stereoscopic video data in order to avoid visible echo images in the images actually displayed takes into account the "visibility" of the echo image in different regions of an image frame to be displayed.

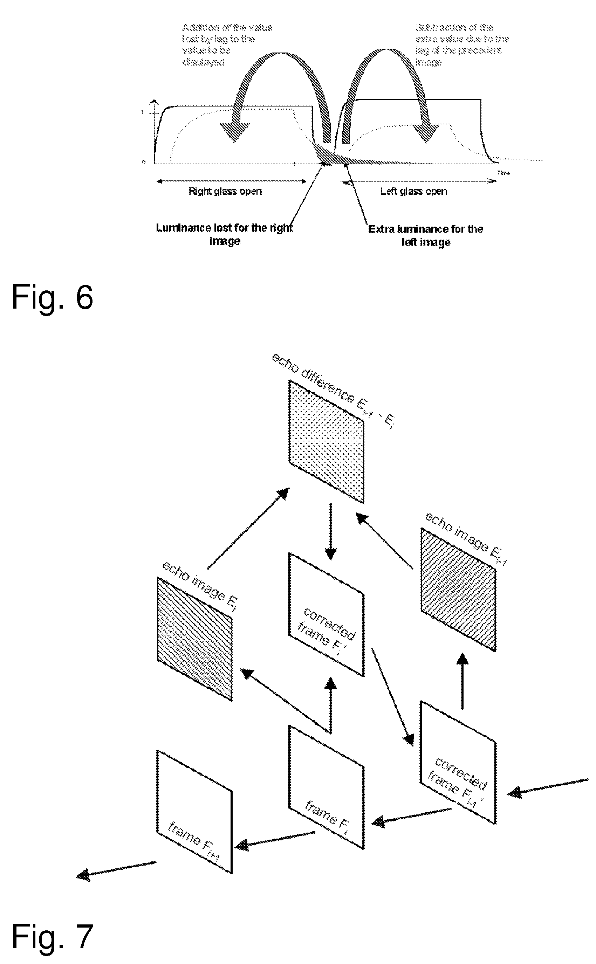

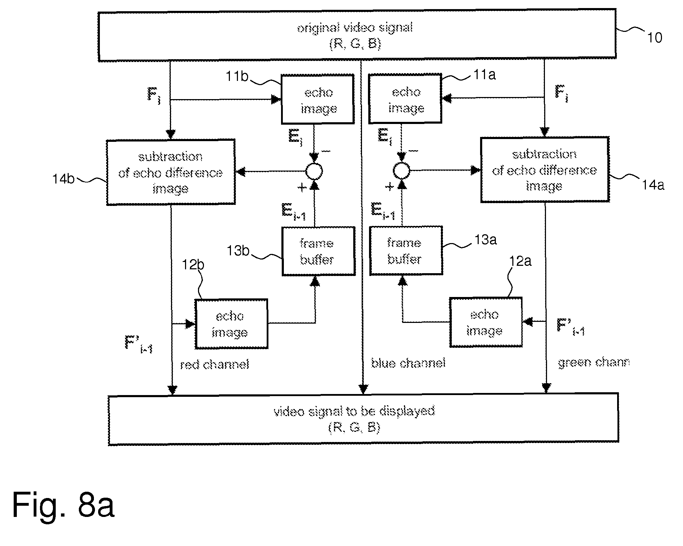

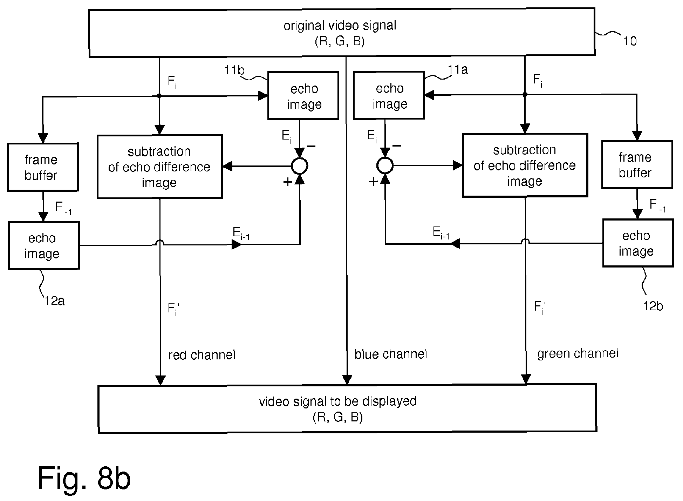

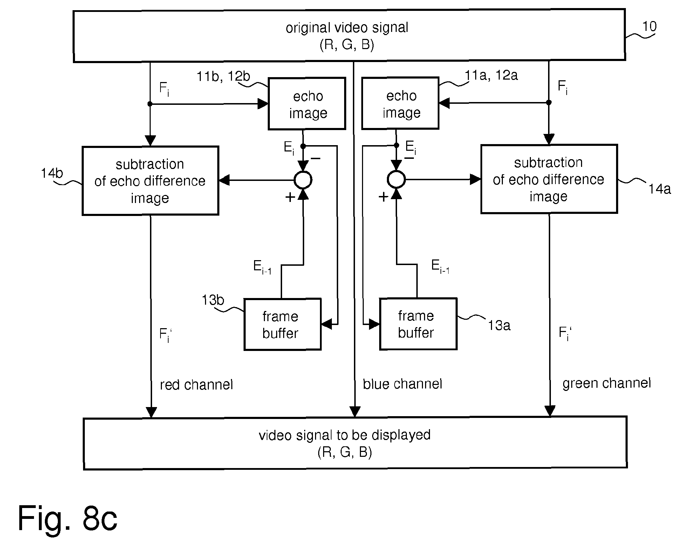

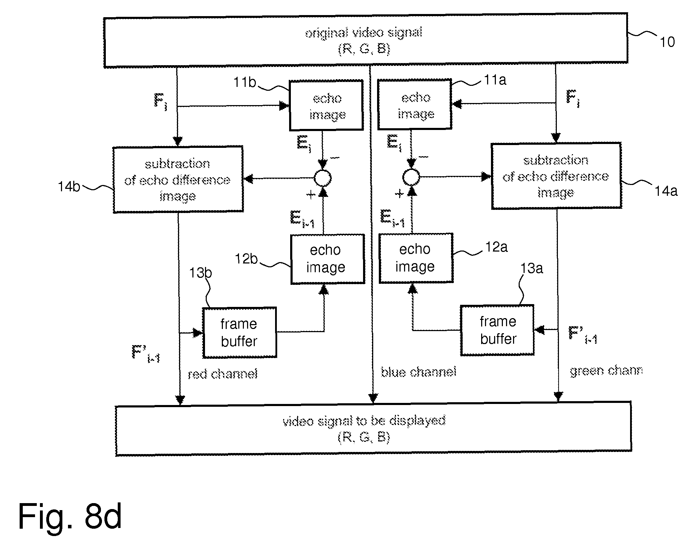

Fig. 6 illustrates an ideal cross-talk compensation as aimed for by the examples of the present invention described herein. Accordingly, the luminance which is "lost" in the echo image is added to a current image frame. Additionally, the extra luminance stemming from the echo of the previous image frame is subtracted from the current image frame. That is, an echo image Eᵢ₋₁ is estimated from (e.g. left) image frame Fᵢ₋₁' as previously discussed above with respect to Fig. 5. Another echo image Eᵢ is estimated from the succeeding (e.g. right) image frame Fᵢ. An echo compensated image frame Fᵢ' is calculated by adding the current echo image Eᵢ and subtracting the previous echo Eᵢ₋₁. In other words an echo compensated image frame Fᵢ' is calculated by subtracting the difference echo image Eᵢ₋₁-Eᵢ. This principle is illustrated in Figs. 7 and 8.

Figure 7 illustrates a sequence of frames Fᵢ₋₁, Fᵢ, Fᵢ₊₁ of a video stream. For the further discussion it may be assumed that frame Fᵢ₋₁ represents a left image, frame Fᵢ represents a right image and frame Fᵢ₊₁, again, represents a left image. The subscript "i" represents a time index or frame number. An echo image Eᵢ₋₁ is calculated from frame Fᵢ₋₁' (corrected in a previous step), whereby the echo image Eᵢ₋₁ represents the "ghost image" of the left image Fᵢ₋₁' appearing in the subsequent right image Fᵢ. As the echo image Eᵢ₋₁ is used for "correcting" the subsequent frame Fᵢ a frame buffer is required for storing the image data. Another echo image Eᵢ is calculated from the frame Fᵢ, whereby the echo image Eᵢ represents the "ghost image" of the right image Fᵢ appearing in the subsequent left image Fᵢ₊₁, or - in other words - the echo Eᵢ represents the luminance (or the image energy) which is "lost" in the right image Fᵢ. The corrected (i.e. echo compensated) frame Fᵢ' is obtained by subtracting the echo difference Eᵢ₋₁-Eᵢ from the current frame Fᵢ, or - in other words - the luminance resulting from the echo Eᵢ₋₁ of the preceding frame Fᵢ₋₁ is subtracted and the luminance "lost" due to the echo Eᵢ of the current frame Fᵢ is added. Following this approach for echo cancellation a high degree of echo extinction may be achieved resulting in a significantly improved stereoscopic image reproduction. The echo cancellation may be performed for each color channel (red, green, blue) separately, whereby the blue channel does not require a correction when using PDPs. A respective flow chart illustrates the echo cancellation in Fig. 8. It should be noted that the steps of calculating the echo image (see box labelled "echo image" in Fig. 8a) may be performed before or after the buffering of the frame. That is the boxes labelled "echo-image" and "frame buffer" may be interchanged in the example of Fig. 8a (this situation is illustrated in Fig. 8d).

Generally Fig. 8a illustrates in an abstract manner a device for processing video data comprising a sequence of successive image frames Fᵢ₋₁, Fᵢ, Fᵢ₊₁. The device comprises a calculation unit 11 (labelled as 11a and 11b for the read and the green color channel, respectively) configured to receive an image frame Fᵢ from a video data source 10 and to calculate a first echo image Eᵢ based on the image frame Fᵢ. The device further comprises a further calculation unit 12 (12a and 12b) including a frame buffer 13 (13a, 13b) for providing a second echo image Eᵢ₋₁ calculated based on a further image frame Fᵢ₋₁ preceding the image frame Fᵢ (in the example of Fig. 8a the echo image Eᵢ₋₁ is calculated using the compensated image frame Fᵢ₋₁' and is thus based on the image frame Fᵢ₋₁). An echo compensation unit 14 is configured to calculate an echo compensated image frame Fᵢ' by subtracting the difference Eᵢ₋₁-Eᵢ of the echo images Eᵢ₋₁, Eᵢ from the image frame Fᵢ. The frame buffers 13a, 13b may be coupled upstream or downstream of the further calculation units 12a, 12b.

In the present example of Fig. 8a, the second echo image Eᵢ₋₁ is calculated from the compensated image frame Fᵢ₋₁' whereas the first echo image Eᵢ is calculated from the uncompensated image frame Fᵢ. However, this is not necessarily the case, both compensated or uncompensated image frames may be used for calculating estimations of the echo images Eᵢ, Eᵢ₋₁. An alternative implementation is illustrated in Fig. 8b where both echo images are calculated directly from the current (uncompensated) image frame Fᵢ and the preceding (uncompensated) image frame Fᵢ₋₁ retrieved from a frame buffer. Another alternative implementation is illustrated in Fig. 8c where, the echo image calculation units 11 and 12 are identical and the calculation has only be performed once. A forth example is illustrated in Fig. 8d which is essentially the identical to the example of Fig. 8 wherein the echo calculation and frame buffering is interchanged.

Using the above discussed novel approach for image cross-talk cancellation the echo compensation is adapted to the image content. Luminance (i.e. energy) is subtracted where "polluting" cross-talk stemming from the preceding frame superposes with the current frame, and luminance is added where the current frame is "loosing" energy without "polluting" the subsequent frame. This improves the overall quality of cross-talk cancellation, in particular at low brightness levels at which other methods experience difficulties in achieving a proper echo compensation. The novel method presented herein does not reduce image brightness of the overall image, thus increasing the margin for echo compensation in regions of low brightness levels as compared to standard approaches.

The problem that a compensation is not possible in image regions where the subtraction would result in negative brightness values still remains. However, using the novel cross-talk cancellation approach as discussed above the actual impact on image quality due to this effect is significantly reduced. As explained with respect of Fig. 5 negative brightness values may be avoided by adding a brightness offset (prior to echo compensation) which, however, results in black colour appearing gray. This is caused, for instance, when the value to be subtracted Eᵢ₋₁-Eᵢ is higher than the value of the current frame Fᵢ.

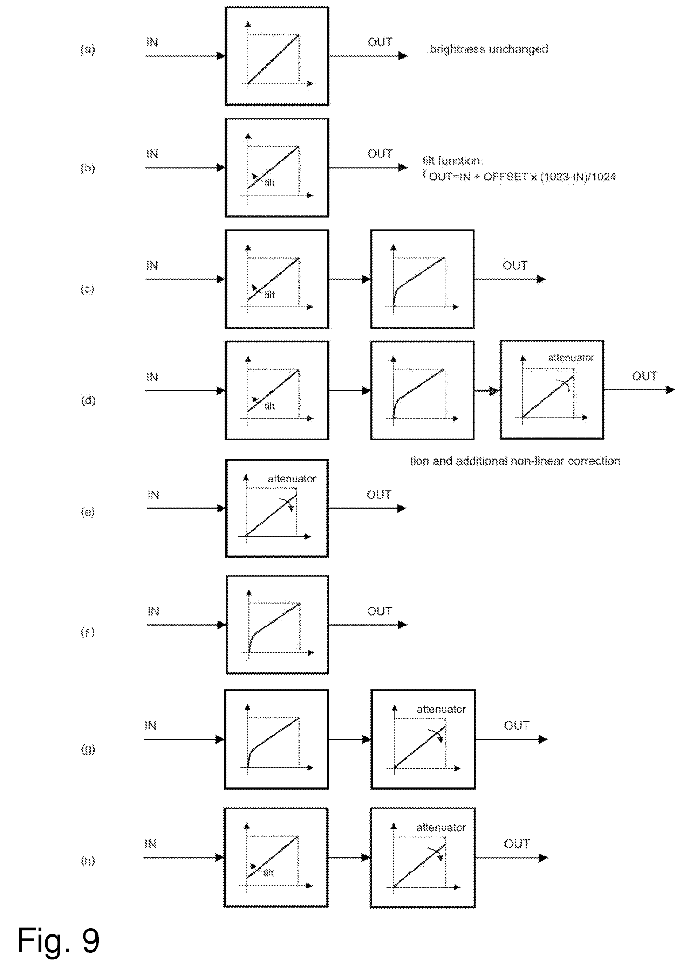

In order to alleviate this effect the brightness of a frame may be subjected to a brightness modification function called "tilt function" which allows applying a small offset to low brightness levels only when required, so as to avoid negative brightness levels after compensation. Additionally, the "tilt function" may include a non-linear component which allows to apply an offset to only these brightness levels where required without shifting black regions to gray. In essence the application of such "tilt function" has a similar effect than a gamma correction. Exemplary tilt functions are illustrated in Figs. 9a-h which may be regarded as "modified gamma correction curves".

Fig. 9 illustrates the effect of the brightness modification using the tilt function mentioned above. Fig. 9a illustrates a function that has no effect and corresponds to a gamma correction with a gamma value of unity. That is, in the example of Fig. 9a an unmodified gamma correction would be performed as it is common in display devices. Fig. 9b illustrates the effect of the tilt function which adds a higher offset to low brightness values than to high brigtness values. Thus the curve is "tilted" by adding the offset as compared to the linear function of Fig. 9a. In an exemplary case of a brightness resolution of 10 bits (ranges from 0 to 1023) the tilt function may be written as OUT = IN + OFFSET · ((1023-IN)/1024), whereby IN is the input brightness (ranging from 0 to 1023), OUT is the output brightness and OFFSET the offset added to a brightness of zero. Fig. 9c illustrates the case in which an additional non-linear tonality curve is included in the brightness modification. The goal of such a non-linear correction is to have a steeper growth of the luminance in dark gray areas while keeping the full black value at zero. To perform that transformation, a first gray level Go is selected that corresponds to the lowest gray level in the image that is not zero and where the non-linear transformation should start. Then a second gray level G₁ is selected that corresponds to the continuation of the linear region. The non-linear transformation will be applied between Go and G₁ only.

The computation of the levels G₀ and G₁ and the parameterization of the transformation can be done automatically by analyzing a histogram of the ghost energy per level that cannot be compensated. That is, for each (low) gray level, it can be computed how many pixels exhibit a gray level for which cross-talk cannot be compensated (because negative brightness values would occur). Thus, a histogram of the non-compensable image regions is built. This histogram can be then used to compute the values of G₀ and G₁ and also to select among several non-linear functions. The transformation will be adapted to reduce as much as possible the peaks in the histogram. An example for the non-linear transformation may be as follows: OUT = Go + SQRT(IN-G₀)/SQRT(G₁-G₀)·(G1-G₀). This is only an example given to better understand the concept. However, usually, more complex transformation may be applied using a LUT (look up table) in order to get better asymptotic behavior and smoother transitions between linear and non-linear parts of the transformation.

The actual value of OFFSET and the actual nonlinearity (see Fig. 9c) may be automatically adapted depending on the actual average brightness of the current frame. Thereby, the adaptation should not be performed too fast in order to avoid disturbing variances of the overall brightness of the image. The tilt function including the non-linear component may be combined with the actual gamma correction curve yielding a modified gamma correction curve.

In accordance with a further embodiment of the present invention an automated adaptation of the offset may be used for the above-mentioned tilt function. A fixed tilt value (i.e. the offset value OFFSET being a predefined value) introduces - when permanently active - a significant decrease in the picture contrast for all images, regardless of whether these images are deteriorated by crosstalk in black area ("negative compensation") or not. This is undesired as 3D cross-talk is perceived by a human viewer only in a few extreme regions of an image. In other words, a fixed tilt value may deteriorate the contrast for all images for only improving a few images. To improve this situation the use of an "auto tilt" function is suggested where the tilt is only applied when it is necessary. An integrator evaluates on a per-frame-basis the total "ghost" energy which is the image energy that cannot be compensated, and, if a threshold value is exceeded, then tilt function is activated.

More precisely, a "tilt control" algorithm is employed according to which two energy values are calculated and evaluated once per frame and using the tilt value of the previous frame:
- EG: Ghost Energy: The ghost energy represents the luminous energy of the cross-talk present in the image area which would have a negative brightness value if full compensation would be applied (which actually can not be done in realty). In other words, the "ghost energy" is the uncompensable energy of an echo image.
- ET: Tilt Energy: The tilt energy represents the luminous energy of the image area which has a brightness value lower than the "tilt value" OFFSET.

That is, the "ghost energy" EG represents the luminous energy of the cross-talk present in that part of the image area where the effect of the echo image can not be compensated as the compensation would lead to a negative brightness value. The "tilt energy" ET represents the luminous energy of that part of the image area where the brightness level is below the "tilt value" OFFSET. These areas would therefore be strongly affected by this offset. Thus, there is a conflict of objectives between "compensating echo image effects" and "not brightening dark image regions".

An important task is to find a good compromise between those objectives, as the dark image regions, which would be compensated when applying the tilt function, as well as the dark regions where no crosstalk is visible both become brighter due to the application of the tilt function. In other words, if an image contains a lot of (nearly) black image regions (e.g. a night scene with moon) and if only a very small area with cross-talk is appearing (cross-talk around the moon in a black sky), it would be better to use a very a low tilt value OFFSET (or a tilt value of zero) so as to avoid brightening the night scene. More generally, if an image has a huge amount of black (or dark gray), it is preferable not to use an OFFSET value to keep the contrast high, as the contrast impression is an important parameter relevant for the quality of the visual perception. Accepting a small cross-talk would have a lower impact on the 3D image than fully compensating the cross-talk but brightening the image. Therefore, each energy value EG, ET is compared with two threshold values:
- "ghost energy" EG is compared with an upper threshold A and a lower threshold B;
- "tilt energy" ET is compared with an upper threshold C and a lower threshold D.

Subsequently, on a per-frame-basis a decision to increase (inc), to decrease (dec) (by an increment or, respectively, decrement value STEP), or to keep the OFFSET value is taken using these thresholds A, B, C, D. An example is given on table below:

| | EG > A | A > EG > B | B > EG |
|---|---|---|---|
| ET > C | dec OFFSET | dec OFFSET | dec OFFSET |
| C > ET > D | keep OFFSET | keep OFFSET | dec OFFSET |
| D > ET | inc OFFSET | keep OFFSET | dec OFFSET |

The above table illustrates how the tilt value OFFSET of the subsequent frame may be computed based on the estimation of the values EG and ET computed from a current frame. In a first approach the increment/decrement value STEP = 1, so that the maximum change of the tilt value OFFSET per frame is 1. However to have smoother changes and a slower regulation speed, it may be useful to use lower values (e.g. STEP=0.1 means a change of 1 every 10 frames).

The threshold values have to be fine-tuned so as to match with the display device used, depending on its resolution, the amount of cross-talk, etc. These are rather empiric values resulting from tests and experimental optimization for each display type.

Following this concept it may be important to increase or decrease the OFFSET value by only a small amount (e.g. lower or equal 1) so as to avoid a "flashing" or "pumping" of the image.

In case of PDPs, the additive cross-talk (energy added to the next image) is usually the most critical effect which is stronger than the energy "missing" (as it is "lost" in the subsequent frame). However, when using other display technologies such as LCDs, the "missing" energy (LCDs are slow in both directions, i.e. increasing or decreasing luminance) can be equally critical as (or even worse than) the additive cross-talk.

In the latter case, the principle of using an adaptive tilt function should also be effective for the brightest (i.e. the light gray and white) regions of the image. An echo image effect may also be uncompensable when the value to be subtracted Eᵢ₋₁-Eᵢ is negative and thus the correction would yield brightness values higher than the maximum available value. For instance, if a local brightness value is 1023 in 10 bit, no energy can be added for the respective pixel and the negative crosstalk cannot be compensated in this pixel position.

Therefore a similar "tilt function" may be used having the form OUT = IN - ATTENUATION · (IN/1024) as illustrated in Figure 9d, 9e or 9g. This transformation can be combined with the previous tilt function (see Fig. 9b) or with the combination of tilt and non-linear transformation (Fig. 9c). Moreover, a similar concept to automate this correction can be applied as for the above-explained auto-tilt. In this case the value ATTENUATION can be regarded as "tilt value" which is automatically adapted in a similar way as the "tilt value" OFFSET value as explained above. Accordingly, a ghost energy (i.e. the energy representing the luminous energy of an image resulting from cross-talk whose compensation would result in brightness values higher than a maximum brightness) is calculated as well as a a tilt energy (i.e. the energy difference between the maximum possible luminous energy and the actual luminous energy of that part of the image having a brightness higher than a predefined brightness threshold). For each image frame, the ghost energy and the tilt energy are compared with one or more energy thresholds, and, dependent on the result of this comparison, the attenuation value ATTENUATION is increased, decreased or kept unchanged. The example explained further above with respect to the automatic adaptation of the "tilt" value OFFSET is - mutatis mutandis - also valid for the present example of automatic adaptation of the attenuation value ATTENUATION. In essence only the luminous energy scale is reversed.

Although the present invention and its advantages have been described in detail, it should be understood that various changes, substitutions, and alterations can be made herein without departing from the scope of the invention as defined by the appended claims.

Moreover, the scope of the present application is not intended to be limited to the particular embodiments of the process, machine, manufacture, composition of matter, means, methods, and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for processing video data comprising a sequence of successive image frames representing alternating left and right images of corresponding stereoscopic images to be displayed on a display device; the method comprises:
receiving a first image frame (Fᵢ) from a video data source;
providing a first echo image (Eᵢ) based on the first image frame (Fᵢ) and on the technology used in the display;
calculating a first echo compensated image frame (Fᵢ') by subtracting the difference (Eᵢ₋₁-Eᵢ) of the first echo image (Eᵢ) and a second echo image (Eᵢ₋₁) from the first image frame (Fᵢ);
wherein the second echo image (Eᵢ₋₁) is provided based on an second echo compensated image frame (Fᵢ₋₁), which is calculated from an image frame preceding the first image frame (Fᵢ), and based on the technology used in the display.

2. The method of claim 1 where providing first and second echo images (Eᵢ, Eᵢ₋₁) includes applying a transformation function or a look-up table.

3. The method of claim 1 or 2 where, before the step of providing an echo compensated image frame (Fᵢ') the image frame (Fᵢ) is subject to a brightness modification function.

4. The method of claim 3 where the brightness modification function includes a selective increase of low brightness values and/or a selective attenuation of high brightness values by respective offset or attenuation values (OFFSET, ATTENUATION).

5. The method of one of the claims 1 to 4,
where the image frames are subject to a brightness modification function which is a linear function starting at an offset value (OFFSET), and/or
where the image frames are subject to a brightness modification function which is a linear function remaining an attenuation value (ATTENUATION) below a maximum brightness value.

6. The method of one of the claims 1 to 5,
where the image frames are subject to a brightness modification function which includes a non-linear transformation which may comprise a non-linear segment between two brightness values (G₀, G₁) and linear segments below the first brightness value (G₀) and above the second brightness value (G₁),
wherein the two brightness values are calculated based on the echo image.

7. The method of one of the claims 3 to 6 wherein the brightness modification function is adapted dependent on the brightness values of the current image frame.

8. The method of one of the claims 3 to 7 wherein the offset and/or attenuation values are adapted depending on the brightness values of the current image frame.

9. The method of one of the claims 1 to 8 wherein at least one echo image (Eᵢ₋₁) is stored in a frame buffer.

10. The method of one of the claims 1 to 9 wherein the image frames represent the brightness information of a red, a green or a blue colour channel.

11. The method of one of the claims 7 or 8, including
calculating a ghost energy being the energy representing the luminous energy of an image resulting from cross-talk whose compensation would result in negative brightness values;
calculating a tilt energy being the energy representing the luminous energy of that part of the image having a brightness lower than a pre-defined brightness threshold;
comparing, for each image frame, the ghost energy and the tilt energy with one or more energy thresholds; and
increasing, decreasing, or keeping the offset value dependent on the result of the comparison.

12. The method of one of the claims 7, 8 or 11, including
calculating a ghost energy being the energy representing the luminous energy of an image resulting from cross-talk whose compensation would result in brightness values higher than a maximum brightness;
calculating a tilt energy being the energy difference between the maximum possible luminous energy and the actual luminous energy of that part of the image having a brightness higher than a pre-defined brightness threshold;
comparing, for each image frame, the ghost energy and the tilt energy with one or more energy thresholds; and
increasing, decreasing, or keeping the attenuation value dependent on the result of the comparison.

13. The method of claims 11 and 12, wherein ghost energy and tilt energy are compared with two different energy thresholds, respectively, so that the comparison is able to distinguish nine different cases.

14. A system comprising a display device and a device for processing video data, which comprises a sequence of successive image frames representing alternating left and right images of corresponding stereoscopic images to be displayed on the display device; the device for processing video data comprises:
a calculation unit (11) configured to receive a first image frame (Fᵢ) from a video data source (1) and to calculate a first echo image (Eᵢ) based on the first image frame (Fᵢ) and based on the technology used in the display device;
a frame buffer (13) configured to provide a second echo image (Eᵢ₋₁) provided based on a second echo compensated image frame (Fᵢ₋₁), which is calculated from an image frame preceding the first image frame (Fᵢ), and based on the technology used in the display using the calculation unit (11) or a further calculation unit (12);
an echo compensation unit (14) configured to calculate a first echo compensated image frame (Fᵢ') by subtracting the difference (Eᵢ₋₁-Eᵢ) of the echo images (Eᵢ₋₁, Eᵢ) from the first image frame (Fᵢ).

## Patentansprüche

1. Ein Verfahren zur Verarbeitung von Videodaten, die aus einer Sequenz von aufeinanderfolgenden Einzelbildern bestehen, die abwechselnde linken und rechten Bilder von korrespondierenden stereoskopischen Bildern darstellen, die auf einem Anzeigegeräte angezeigt werden; das Verfahren umfasst:
Empfangen eines ersten Einzelbildes (Fᵢ) von einer Videodatenquelle;
Bereitstellung eines ersten Echobildes (Eᵢ) basierend auf dem ersten Einzelbild (Fᵢ) und auf der Technologie, die in dem Anzeigegerät verwendet wird;
Berechnung eines ersten echokompensierten Einzelbildes (Fᵢ') durch Subtrahieren der Differenz (Eᵢ₋₁ - Eᵢ) zwischen dem ersten Echobild (Eᵢ) und einem zweiten Echobild (Eᵢ₋₁) von dem ersten Einzelbild (Fᵢ);
wobei das zweite Echobild (Eᵢ₋₁) bereitgestellt wird basierend auf einem zweiten echokompensierten Einzelbild (Fᵢ₋₁), welches von einem, dem ersten Einzelbild (Fᵢ) vorausgehenden Einzelbild berechnet wird, und basierend auf der im Anzeigegerät verwendeten Technologie.

2. Das Verfahren aus Anspruch 1, wobei die Bereitstellung der ersten und zweiten Echobilder (Eᵢ, Eᵢ₋₁) die Verwendung einer Transformationsfunktion oder einer Look-up-Tabelle einschließt.

3. Das Verfahren nach Anspruch 1 oder 2, wobei, vor der Bereitstellung eines echokompensierten Einzelbildes (Fᵢ'), das Einzelbild (Fᵢ) einer Helligkeits-Modifikationsfunktion unterliegt.

4. Das Verfahren nach Anspruch 3, wobei die Helligkeits-Modifikationsfunktion eine selektive Erhöhung von niedrigen Helligkeitswerten und/oder eine selektive Abschwächung von hohen Helligkeitswerten durch entsprechende Offset- oder Abschwächungswerte umfasst (OFFSET,ATTENUATION).

5. Das Verfahren nach einem der Ansprüche 1 bis 4,
wobei die Einzelbilder einer Helligkeits-Modifikationsfunktion unterliegen, die eine lineare Funktion ist, die bei einem Offsetwert (OFFSET) beginnt, und/oder
wobei die Einzelbilder einer Helligkeits-Modifikationsfunktion unterliegen, die eine lineare Funktion ist, die einen Abschwächungswert (ATTENUATION) unter einem maximalen Helligkeitswert bleibt.

6. Das Verfahren nach einem der Ansprüche 1 bis 5,
wobei die Einzelbilder einer Helligkeits-Modifikationsfunktion unterliegen, die eine nicht-lineare Transformation aufweist, die ein nicht-lineares Segment zwischen zwei Helligkeitswerten (Go, G₁) und lineare Segmente unter dem ersten Helligkeitswert (G₀) und über dem zweiten Helligkeitswert (G₁) aufweisen kann,
wobei die zwei Helligkeitswerte auf der Basis des Echobildes berechnet werden.

7. Das Verfahren nach einem der Ansprüche 3 bis 6, wobei die Helligkeits-Modifikationsfunktion abhängig von den Helligkeitswerten des aktuellen Einzelbildes angepasst wird.

8. Das Verfahren nach einem der Ansprüche 3 bis 7, wobei die Offset- und/oder Abschwächungswerte abhängig von den Helligkeitswerten des aktuellen Einzelbildes angepasst werden.

9. Das Verfahren nach einem der Ansprüche 1 bis 8, wobei mindestens ein Echobild (Eⱼ₋₁) in einem Bildspeicher gespeichert wird.

10. Das Verfahren nach einem der Ansprüche 1 bis 9, wobei die Einzelbilder die Helligkeitsinformation eines roten, eines grünen oder eines blauen Farbkanals repräsentieren.

11. Das Verfahren nach einem der Ansprüche 7 oder 8, welches einschließt
Berechnung einer Echoenergie, welche jene Energie ist, die die Lichtenergie eines aus Übersprechen resultierenden Bildes darstellt, dessen Kompensation negative Helligkeitswerte ergeben würde;
Berechnung einer Neigungsenergie, welche jene Energie ist, die die Lichtenergie von jenem Teil des Bildes darstellt, das eine Helligkeit aufweist, die niedriger ist als ein im Voraus definierter Helligkeits-Schwellenwert;
Vergleichen, für jedes Einzelbild, die Echoenergie und die Neigungsenergie mit einem oder mehreren Energieschwellenwerten; und
Erhöhung, Reduzierung oder Beibehaltung des Offsetwertes abhängig vom Ergebnis des Vergleichs.

12. Das Verfahren nach einem der Ansprüche 7, 8 oder 11, welches aufweist
Berechnung einer Echoenergie, welche jene Energie ist, die die Lichtenergie eines aus Übersprechen resultierenden Bildes darstellt, dessen Kompensation Helligkeitswerte ergeben würde, die höher sind als eine maximale Helligkeit;
Berechnung einer Neigungsenergie, welche die Energiedifferenz zwischen der höchstmöglichen Lichtenergie und der tatsächlichen Lichtenergie jenes Teils des Bildes, der eine Helligkeit über einem im Voraus definierten Helligkeits-Schwellenwert hat, ist;
Vergleichen, für jedes Einzelbild, die Echoenergie und die Neigungsenergie mit einem oder mehreren Energie-Schwellenwerten; und
Erhöhung, Reduzierung oder Beibehaltung des Dämpfungswertes abhängig vom Ergebnis des Vergleichs.

13. Das Verfahren nach Anspruch 11 und 12, wobei Echoenergie und Neigungsenergie mit zwei verschiedenen Energieschwellenwerten verglichen werden, so dass der Vergleich neun verschiedene Fälle unterscheiden kann.

14. Ein System, das ein Anzeigegerät und ein Gerät für die Verarbeitung von Videodaten umfasst, die aus einer Sequenz von aufeinanderfolgenden Einzelbilder besteht, welche abwechselnde linke und rechte Bilder korrespondierender stereoskopischer Bilder repräsentieren, die auf dem Anzeigegerät angezeigt werden sollen; das Gerät zur Verarbeitung der Videodaten umfasst:
eine Berechnungseinheit (11), die dazu ausgebildet ist, von einer Videodatenquelle (1) ein erstes Einzelbild (F₁) zu empfangen, und auf Basis des ersten Einzelbilds (F₁) sowie auf Basis der in dem Anzeigegerät verwendeten Technologie ein erstes Echobild (Eⱼ) zu berechnen;
ein Bildspeicher (13), der dazu ausgebildet ist, unter Verwendung der Berechnungseinheit (11) oder einer weiteren Berechnungseinheit (12) ein zweites Echobild (Eⱼ₋₁) bereitzustellen, basierend auf einem zweiten echokompensierten Einzelbild (Fⱼ₋₁), welches von einem dem ersten Einzelbild (Fᵢ) vorausgehenden Einzelbild berechnet wird, sowie basierend auf der in der Anzeige verwendeten Technologie;
eine Echokompensationseinheit (14), die dazu ausgebildet ist, ein erstes echokompensiertes Einzelbild (F₁') zu berechnen durch Subtrahieren der Differenz (Eⱼ₋₁-Eⱼ) zwischen den Echobildern (Eⱼ₋₁, Eⱼ) von dem ersten Einzelbild (F₁).

## Revendications

1. Procédé de traitement de données vidéo comprenant une séquence de trames d'images successives représentant des images gauches et droites en alternance d'images stéréoscopiques correspondantes à afficher sur un dispositif d'affichage, le procédé comprenant :
recevoir une première trame (Fᵢ) d'images d'une source de données vidéo ;
se procurer une première image (Eᵢ) d'écho sur la base de la première trame (Fᵢ) d'images et de la technologie utilisée dans l'affichage ;
calculer une première trame (Fᵢ') d'images d'écho compensée en soustrayant la différence (Eᵢ₋₁-Eᵢ) de la première image (Eᵢ) d'écho et d'une deuxième image (Eᵢ₋₁) d'écho de la première trame (Fᵢ) d'images ;
la deuxième image (Eᵢ₋₁) d'écho étant procurée sur la base d'une deuxième trame (Fᵢ₋₁) d'images d'écho compensée, qui est calculée à partir d'une trame d'images précédant la première trame (Fᵢ) d'images et sur la base de la technologie utilisée dans l'affichage.

2. Procédé suivant la revendication 1, dans lequel se procurer la première et la deuxième images (Eᵢ, Eᵢ₋₁) d'écho comprend appliquer une fonction de transformation ou une table.

3. Procédé suivant la revendication 1 ou 2, dans lequel, avant de se procurer une trame (Fᵢ') d'images d'écho compensée, la trame (Fᵢ) d'images est soumise à une fonction de modification de brillance.

4. Procédé suivant la revendication 3, dans lequel le procédé de modification de brillance comprend une augmentation sélective de valeurs basses de brillance et/ou une atténuation sélective de valeurs hautes de brillance par des valeurs (OFFSET, ATTENUATION) respectives d'annulation ou d'atténuation.

5. Procédé suivant l'une des revendications 1 à 4,
dans lequel on soumet les trames d'images à une fonction de modification de brillance, qui est une fonction linéaire commençant à une valeur (OFFSET) d'annulation et/ou
dans lequel on soumet les trames d'images à une fonction de modification de brillance, qui est une fonction linéaire restant à une valeur (ATTENUATION) d'atténuation en dessous d'une valeur maximum de brillance.

6. Procédé suivant l'une des revendications 1 à 5,
dans lequel on soumet les trames d'images à une fonction de modification de brillance, qui comprend une transformation non linéaire, qui peut comprendre un segment non linéaire entre deux valeurs (G₀, G₁) de brillance, et des segments linéaires en dessous de la première valeur (G₀) de brillance et au-dessus de la deuxième valeur (G₁) de brillance,
les deux valeurs de brillance étant calculées sur la base de l'image d'écho.

7. Procédé suivant l'une des revendication 3 à 6, dans lequel on adapte la fonction de modification de brillance en fonction des valeurs de brillance de la trame d'images en cours.

8. Procédé suivant l'une des revendications 3 à 7, dans lequel on adapte les valeurs d'annulation et/ou d'atténuation en fonction des valeurs de brillance de la trame d'images en cours.

9. Procédé suivant l'une des revendications 1 à 8, dans lequel on mémorise au moins une image (Eᵢ₋₁) d'écho dans un tampon de trame.

10. Procédé suivant l'une des revendications 1 à 9, dans lequel les trames d'images représentent l'information de brillance d'un canal de couleur rouge, d'un canal de couleur verte ou d'un canal de couleur bleue.

11. Procédé suivant l'une des revendications 7 ou 8, comprenant
calculer une énergie fantôme, qui est l'énergie représentant l'énergie lumineuse d'une image provenant d'une diaphonie, dont la composition se traduirait par des valeurs de brillance négatives ;
calculer une énergie de distorsion, qui est l'énergie représentant l'énergie lumineuse de la partie de l'image ayant une brillance inférieure à un seuil de brillance défini à l'avance ;
comparer pour chaque trame d'images l'énergie fantôme et l'énergie de distorsion à un ou à plusieurs seuils d'énergie et
augmenter, diminuer ou conserver la valeur d'annulation en fonction du résultat de la comparaison.

12. Procédé suivant l'une des revendications 7, 8 ou 11, comprenant
calculer une énergie fantôme, qui est l'énergie représentant l'énergie lumineuse d'une image provenant d'une diaphonie, dont la composition se serait traduite par des valeurs de brillance plus grandes qu'une brillance maximum ;
calculer une énergie de distorsion, qui est la différence d'énergie entre l'énergie lumineuse maximum possible et l'énergie lumineuse réelle de la partie de l'image ayant une brillance plus grande qu'un seuil de brillance défini à l'avance ;
comparer pour chaque trame d'images l'énergie fantôme et l'énergie de distorsion à un ou à plusieurs seuils d'énergie et
augmenter, diminuer ou maintenir la valeur d'atténuation en fonction du résultat de la comparaison.

13. Procédé suivant les revendications 11 et 12, dans lequel on compare l'énergie fantôme et l'énergie de distorsion à deux seuils d'énergie différents respectivement de manière à ce que la comparaison puisse distinguer neuf cas différents.

14. Système comprenant un dispositif d'affichage et un dispositif de traitement de données vidéo, qui comprend une séquence de trames d'images successives représentant des images gauches et droites en alternance d'images stéréoscopiques correspondantes à afficher sur le dispositif d'affichage, le dispositif de traitement de données vidéo comprenant :
une unité (11) de calcul configurée pour recevoir une première trame (Fᵢ) d'images d'une source (1) de données vidéo et pour calculer une première image (Eᵢ) d'écho sur la base de la première trame (Fᵢ) vidéo et sur la base de la technologie utilisée dans le dispositif d'affichage ;
un tampon (13) de trame configuré pour procurer une deuxième image (Eᵢ₋₁) d'écho procurée sur la base d'une deuxième trame (Fᵢ₋₁) d'images d'écho compensée, qui est calculée à partir d'une trame d'images précédant la première trame (Fᵢ) d'images, et sur la base de la technologie utilisée dans l'affichage en utilisant l'unité (11) de calcul ou une autre unité (12) de calcul ;
une unité (14) de compensation d'écho configurée pour calculer une première trame (Fᵢ') d'images d'écho compensée en soustrayant la différence (Eᵢ₋₁-Eᵢ) des images (Eᵢ₋₁, Eᵢ) d'écho de la première trame (Fᵢ) d'images.
